# EUROPÄISCHE PATENTSCHRIFT

(11) **EP 4 385 102 B1**
(45) Veröffentlichungstag und Bekanntmachung des Hinweises auf die Patenterteilung: **10.09.2025**
(21) Anmeldenummer: 22757527.1
(22) Anmeldetag: 25.07.2022
(51) Int. Cl.: H01R 13/518, B29C 45/00

(54) **MESSERLEISTEN-GRUNDKÖRPER FÜR EINE ELEKTRISCHE STECKVERBINDUNG**
MALE MULTIPOINT CONNECTOR MAIN BODY FOR AN ELECTRIC PLUG CONNECTION
CORPS PRINCIPAL DE CONNECTEUR MULTIPOINT MÂLE POUR UNE CONNEXION PAR FICHE ÉLECTRIQUE

(30) Priorität: 12.08.2021 DE 102021208878
(43) Veröffentlichungstag der Anmeldung: 19.06.2024
(73) Patentinhaber: Robert Bosch GmbH, 70442 Stuttgart (DE)
(72) Erfinder: LUDWIG, Dieter, 71638 Ludwigsburg (DE); MENACHER, Markus, 74379 Ingersheim (DE)
(86) Internationale Anmeldenummer: PCT/EP2022/070761
(87) Internationale Veröffentlichungsnummer: WO 2023/016788

(56) Entgegenhaltungen:
- EP-A1- 2 760 086
- EP-A1- 3 537 308
- EP-A1- 3 540 867
- EP-A2- 2 469 660
- US-A1- 2016 118 742
- US-B1- 6 171 153

## Beschreibung

### Stand der Technik

Die vorliegende Erfindung betrifft einen Messerleisten -Grundkörper für eine elektrische Steckverbindung, insbesondere für ein Steuergerät eines Kraftfahrzeugs.

Messerleisten bzw. Steckerleisten bzw. Pinleisten für elektrische Steckverbinder sind aus dem Stand der Technik bekannt. Sie bestehen z.B. aus einem Messerleisten-Grundkörper bzw. einem Steckerleisten-Grundkörper bzw. einem Pinleisten-Grundkörper, der üblicherweise als Isolator ausgeführt ist und in den elektrisch leitende Messer, Pins bzw. allgemein Kontaktierelemente (meist sogenannte "male-Kontaktierelemente") eingestitcht bzw. eingeschossen werden. Beispielsweise zeigt die DE 10 2019 216 354 A1 eine Messerleiste, bzw. Pinleiste bzw. eine Steckerleiste für eine vereinfachte Leiterplattenmontage. Aufgrund variabler Geometrieelemente der Messerleiste können bei der Spritzgussherstellung des Messerleiste-Grundkörpers Schwindungen und/oder ein Verzug, insbesondere bei hochpoligen Messerleisten für Steuergeräte eines Kraftfahrzeugs auftreten. Allerdings sind an die Messerleisten-Grundkörper insbesondere hohe maßliche Anforderungen zu stellen. In Richtung eines Steuergeräts muss eine Kontaktierung von Pins auf einer Leiterplatte und eine Abdichtung zum Gehäuse gewährleistet sein. In Richtung zu einem Kabelbaum muss eine Kontaktierung, Verriegelung und Abdichtung zum Gegenstecker sichergestellt werden. Aufgrund der Größe und eines nicht symmetrischen Aufbaus treten neben starkem Verzug häufig auch Durchbiegungen der Messerleiste auf. Um dieses Problem zu lösen, werden z.B. isotrop-schwindende Kunststoffe mit Glaskugeln als Verstärkungselemente verwendet. Deren Festigkeit reicht jedoch für die Anforderung einer Messerleiste eines Kraftfahrzeugs nicht aus. Weiterhin können Messerleisten auch in einem Zwei-Komponenten-Spritzgießvorgang hergestellt werden. Hierdurch kann zwar ein Verzug reduziert werden, dies führt jedoch zu einer aufwendigen Werkzeugtechnik und insbesondere zu längeren Herstellungszeiten der Messerleiste.

EP 3 540 867 A1 offenbart ein Messerleisten-Grundkörper umfassend eine Vielzahl von einseitig offenen Steckaufnahmen, welche in einer Erstreckungsrichtung des Messerleisten-Grundkörpers angeordnet sind und welche eingerichtet sind, Steckelemente aufzunehmen, wobei zwischen benachbarten Steckaufnahmen, insbesondere zwischen allen benachbarten Steckaufnahmen, wobei die Steckaufnahmen ausgehend von einer Ebene, in der die Bodenplatten liegen, in eine erste Richtung vorstehen und die Verbindungstaschen ausgehend von der Ebene in eine zweite Richtung entgegengesetzt zur ersten Richtung vorstehen.

### Offenbarung der Erfindung

Der erfindungsgemäße Messerleisten-Grundkörper bzw. Steckerleisten-Grundkörper mit den Merkmalen des Anspruchs 1 weist demgegenüber den Vorteil auf, dass ein Verzug und/oder Schwund und/oder eine Durchbiegung des Messerleisten-Grundkörpers vermieden werden kann bzw. stark reduziert werden kann. Somit weist der Messerleisten-Grundkörper eine besonders hohe Maßhaltigkeit auf. Dadurch können die hohen Anforderungen an Messerleisten, die in Fahrzeugen in Verbindung mit Steuergeräten oder dgl. verwendet werden, erfüllt werden. Dabei kann der Messerleisten-Grundkörper lediglich beispielsweise im Spritzguss hergestellt werden. Er ist in einem derartigen beispielhaften Fall besonders einfach und kostengünstig und insbesondere Massenfertigungstauglich herstellbar. Vorteilhaft stehen dann für eine Fertigung nicht lediglich isotrop schwindende Materialien zur Verfügung, was vorteilhaft eine wesentlich größere Auswahl an Materialien für die Herstellung ermöglicht. Weiterhin vorteilhaft kann auch auf Einlegeteile z.B. entlang einer Bodenplatte verzichtet werden.

Dies wird erfindungsgemäß dadurch erreicht, dass der Messerleisten-Grundkörper eine Vielzahl von einseitig offenen Steckaufnahmen aufweist, welche in einer Erstreckungsrichtung des Messerleisten-Grundkörpers angeordnet sind und welche eingerichtet sind, Steckelemente, z.B. eines Kabelbaums, aufzunehmen. Jede Steckaufnahme weist dabei eine eigene Bodenplatte auf. Zwischen benachbarten Steckaufnahmen ist eine einseitig offene Verbindungstasche angeordnet, welche diese zueinander benachbarten Steckaufnahmen miteinander verbindet. Dabei kann z.B. vorgesehen sein, dass zwischen allen benachbarten Steckaufnahmen jeweils eine einseitig offene Verbindungstasche angeordnet ist. Die Steckaufnahmen sind ausgehend von einer Ebene E, in der die Bodenplatten der Steckaufnahmen liegen, in eine erste Richtung Z1 vorstehend und die Verbindungstaschen sind ausgehend von der Ebene E in eine zweite Richtung Z2 entgegengesetzt zur ersten Richtung Z1 vorstehend. Weiter sind eine offene Seite der Verbindungstaschen und eine offene Seite der Steckaufnahmen im Wesentlichen in eine gleiche Richtung gerichtet. Somit liegen die beiden offenen Seiten im Wesentlichen parallel zueinander.

Dabei ist unter dem Ausdruck "im Wesentlichen in eine gleiche Richtung" zu verstehen, dass die Richtungen relativ zueinander einen Winkel von bis zu 40° einschließen können. Bevorzugt ist der Winkel maximal 30°, weiter bevorzugt maximal 20°, weiter bevorzugt 10° und noch weiter bevorzugt ≤ 3°.

Der sogenannte Messerleisten-Grundkörper kann hierbei synonym zum Begriff Steckerleisten-Grundkörper bzw. Pinleisten-Grundkörper verwendet werden. Es versteht sich, dass in dem Messerleisten-Grundkörper bzw. in dem Steckerleisten-Grundkörper bzw. in dem Pinleisten-Grundkörper Kontaktierelemente (z.B. male-Kontaktierelemente) angeordnet sind, die z.B. einen quadratischen, rechteckigen, ovalen oder auch runden Querschnitt aufweisen können. Die einzelnen Kontaktierelemente werden dann üblicherweise durch ein in einem Gegensteckelement angeordnetes Gegenkontaktierelement (z.B. ein Female-Gegenkontaktierelement) kontaktiert.

Es versteht sich, dass die Steckaufnahmen zumindest einseitig offen ausgebildet sind. Beispielsweise kann eine Steckaufnahme ausgehend von der Bodenplatte einen umlaufenden Kragen aufweisen, der an seiner von der Bodenplatte abgewandten Seite offen ist, so dass ein Stecker in die Steckaufnahme eingesteckt werden kann. Es ist jedoch auch denkbar, dass ein solcher, als mechanisches Führungselement dienender Kragen seitliche Schlitze aufweist, um z.B. eine gewisse Flexibilität zu erhalten. In diesem Fall ist der Kragen und damit auch die Steckaufnahme in bzw. an mehr als einer Seite zumindest teilweise offen ausgebildet.

In gleicher Weise ist die Verbindungstasche zumindest einseitig offen ausgebildet. Das bedeutet: die Verbindungstasche kann z.B. derart ausgebildet sein, dass sie auch noch an wenigstens einer weiteren Seite zumindest teilweise geöffnet ist, z.B. an einer Seite, die senkrecht zur ersten Richtung ausgebildet ist.

Es ist wenigstens eine Verbindungstasche in dem Messerleisten-Grundkörper vorgesehen. Diese wenigstens eine Verbindungstasche ist zwischen zwei zueinander benachbarten Steckaufnahmen angeordnet. Es kann somit auch bei einem Messerleisten-Grundkörper mit z.B. drei, vier oder noch mehr Steckaufnahmen ausreichend sein, wenn lediglich eine einzige Verbindungstasche vorgesehen ist. Selbstverständlich können auch mehrere Verbindungstaschen vorgesehen sein. Eine bevorzugte, beispielhafte Ausführungsform sieht zwischen je zwei zueinander benachbarten Steckaufnahmen jeweils eine Verbindungstasche vor. Selbstverständlich können in dem Bereich zwischen zueinander benachbarten Steckaufnahmen auch mehrere Verbindungstaschen angeordnet sein.

Somit kann durch das Vorsehen von offenen Verbindungstaschen, welche im Wesentlichen in die gleiche Richtung wie die Steckaufnahmen geöffnet sind, bei bzw. nach der Herstellung des Messerleisten-Grundkörpers ein Verzug und insbesondere bei sehr langen Grundkörpern von z.B. mehr als 80mm Länge und/oder Grundkörpern mit wenigstens zwei Steckaufnahmen auch eine Durchbiegung in Längsrichtung vermieden werden oder zumindest auf einen Wert von höchstens 0,5 mm begrenzt werden, bevorzugt auf einen Wert von höchstens 0,3 mm. Die Verbindungstaschen können dabei insbesondere einen Winkelverzug bei den Steckaufnahmen verhindern. Somit kann eine Minimierung eines Verzugs an Messerleisten-Grundkörpern erreicht werden, ohne dass lediglich isotrop schwindende Materialien verwendbar sind oder ein ZweiKomponenten-Spritzguss oder andere aufwendige Maßnahmen zur Verzugsverhinderung bei Messerleisten-Grundkörpern notwendig sind, wie z.B. separat beizustellende Verstärkungselemente.

Insbesondere können die einseitig offenen Steckaufnahmen unterschiedliche Geometrien aufweisen und auch für unterschiedliche Steckelemente ausgelegt sein. Die einseitig offenen Steckaufnahmen sind vorzugsweise becherförmig mit nur einer offenen Seite ausgebildet und insbesondere im Wesentlichen viereckig, vorzugsweise mit abgerundeten Ecken, vorgesehen. Weiter bevorzugt ist eine Höhe der einseitig offenen Steckaufnahmen des Grundkörpers gleich. Ein Steckelement (Gegenstecker) der Steckaufnahme ist vorzugsweise vollständig in der Steckaufnahme aufgenommen. Im Inneren der Steckaufnahmen wird ein elektrischer Kontakt zu den Steckelementen hergestellt. Hierzu können in den Steckaufnahmen z.B. jeweils eine Vielzahl von Kontaktierungselementen wie z.B. Kontaktierungspins oder Flachmesser oder dergleichen anordenbar sein. Diese Kontaktierungselemente können z.B. in den fertig hergestellten Messerleisten-Grundkörper eingeschossenen oder anderweitig eingebracht werden bzw. eingebracht sein. Die Steckaufnahmen können unterschiedliche geometrische Abmessungen aufweisen und insbesondere auch bevorzugt zusätzlich Führungselemente und/oder Elemente (sogenannte Kodierelemente) für ein ordnungsgemäßes lage- und positionsrichtiges Einstecken der Steckelemente aufweisen. Die Steckelemente weisen z.B. Buchsenkontakte auf, die mit den Kontaktierungselementen einen elektrischen Kontakt herstellen können.

Weiter bevorzugt sind die erste Richtung Z1, in welcher die Steckaufnahme von der Ebene E der Bodenplatte vorstehen und die zweite Richtung Z2, in welcher die Verbindungstaschen ausgehend von der Ebene E vorstehen, senkrecht zur Ebene E.

Die Unteransprüche zeigen bevorzugte Weiterbildungen der Erfindung.

Vorzugsweise weist die Bodenplatte der Steckaufnahmen eine erste Wandstärke D1 auf und die Seitenwände der Steckaufnahmen weisen eine zweite Wandstärke D2 auf. Die Ungleichung 0,3 x D1 < D2 < 0,65 x D1 ist dabei erfüllt. Insbesondere ist dabei D2 = 0,5 x D1. Auf diese Weise kann vorteilhaft eine besonders gute Stabilität des Messerleisten-Grundköpers, insbesondere entlang der Erstreckungsrichtung bzw. entlang der Ebene E, sichergestellt werden. Gleichzeitig kann vorteilhaft Material eingespart werden, da die zweite Wandstärke D2 der Seitenwände vorwiegend eine Führungs- und Positionierfunktion für die Steckelemente haben und demnach nicht dieselbe Stabilität erfordern wie die Bodenplatte. Weiterhin vorteilhaft können so die Steckaufnahmen enger zueinander positioniert werden, was kostbaren Platz spart. Weiterhin vorteilhaft begünstigt eine derartige Auslegung eine besonders verzugsarme Ausgestaltung des Messerleisten-Grundkörpers, da relativ wenig Volumen von der Ebene E absteht.

In einer Weiterbildung ist die zweite Wandstärke D2 von Seitenwänden der Steckaufnahmen, die von der Bodenplatte vorstehen, gleich einer dritten Wandstärke D3 von Taschen-Seitenwänden der Verbindungstasche. Dadurch kann insbesondere bei einem Spritzgussvorgang eine gleichmäßige Verteilung des Spritzmaterials sichergestellt werden. Jedoch wird auch bei anderen Herstellungsmethoden (z.B. Fräsen aus dem Vollen oder 3D-Druck, etc.) eine besonders einfache Herstellung bewirkt. Es versteht sich, dass für die vorgeschlagene Weiterbildung die vorstehend aufgeführte Ungleichung nicht zwingend erfüllt sein muss.

In einer Weiterbildung ist eine vierte Wandstärke D4 einer Grundplatte der Verbindungstaschen gleich der dritten Wandstärke D3 der Taschen-Seitenwände der Verbindungstaschen. Dadurch wird vorteilhaft der Herstellvorgang besonders vereinfacht. Auch eine Qualitätskontrolle in Form einer Dickenmessung ist dadurch erheblich vereinfacht. Es versteht sich, dass die vorgeschlagene Weiterbildung unabhängig von den beiden vorstehend vorgeschlagenen Weiterbildungen vorgenommen werden kann. Sie kann also alternativ oder zusätzlich zu diesen eingesetzt werden.

Gemäß einer weiteren bevorzugten Ausgestaltung der Erfindung ist die Ebene E eine Mittelebene der Bodenplatte, wobei die Seitenwände der Steckaufnahmen ausgehend von der Mittelebene der Bodenplatten eine erste Länge L1 aufweisen und wobei die Taschen-Seitenwände der Verbindungstaschen, ausgehend von einem Innenboden der Grundplatte der Verbindungstaschen bis zur Mittelebene der Bodenplatte eine zweite Länge L2 aufweisen, wobei die erste Länge L1 mindestens doppelt so groß ist wie die zweite Länge L2. Dadurch wird vorteilhaft ein besonders einfach und kostengünstig herstellbarer Messerleisten-Grundkörper geschaffen, da eine Aushöhlung derartiger Taschentiefen (gegeben durch die zweite Länge L2) bzw. ein Entformen derartiger Taschentiefen noch mit gut vertretbarem Aufwand möglich ist ohne aufwändige Nacharbeiten zu erfordern. Die für derartige Taschentiefe notwendigen Werkzeuge können kostengünstig hergestellt und gewartet werden. Weiterhin vorteilhaft erfordern Verbindungstaschen mit einer derartigen Taschentiefe nur relativ wenig Platz auf derjenigen Seite des Messerleisten-Grundkörpers, der der Seite der Steckaufnahmen abgewandt ist. Auf der Seite der Verbindungstaschen können z.B. elektronische Komponenten, z.B. eines Steuergeräts, angeordnet sein. Der zur Verfügung stehende Raum auf dieser Seite ist üblicherweise äußerst knapp bemessen. Somit kann durch eine derartige Taschentiefe ein vernünftiger Kompromiss zwischen zusätzlichem Raumbedarf und einer Verringerung von Verzug des Messerleisten-Grundkörpers geschaffen werden. Weiterhin kann vorteilhaft mit derartigen Taschentiefen ein besonders verzugsarmer Messerleisten-Grundkörper bereitgestellt werden. Mit anderen Worten: dadurch ist sichergestellt, dass die zweite Länge L2 der Taschen-Seitenwände ausreichend groß ist, um einen Verzug des Messerleisten-Grundkörpers zu vermeiden. Grundsätzlich sind je nach Anwendungsfall auch andere Taschentiefen denkbar. Die Mittelebene der Bodenplatte der Steckaufnahmen liegt dabei in der Mitte der Bodenplatte, so dass eine Dicke der Bodenplatte in zwei gleiche Teilbereiche unterteilt ist. Es versteht sich, dass die vorgeschlagene Weiterbildung unabhängig von den anderen vorgeschlagenen Weiterbildungen vorgenommen werden kann. Sie kann also alternativ oder zusätzlich zu diesen eingesetzt werden.

Weiter bevorzugt ist die Ungleichung 0,15 x L1 < L2 < 0,5 x L1 erfüllt und insbesondere ist die Ungleichung 0,2 x L1 < L2 < 0,38 x L1 erfüllt und besonders bevorzugt ist L2 = 0,33 x L1. Dadurch werden die vorstehend beschriebenen Vorteile bewirkt. Insbesondere kann durch die vorgeschlagenen Relationen ein besonders vorteilhafter Kompromiss zwischen verfügbarem Raum unterhalb der Ebene E (also auf derjenigen Seite der Ebene E, die der Seite der Steckaufnahmen abgewandt ist) und Verzugsarmut bewirkt werden. Auch lassen sich für diese Relationen die Werkzeuge zur Herstellung des Messerleisten-Grundkörpers besonders einfach herstellen bzw. bei einem 3D-Druck oder einem Fräsen aus dem Vollen etc. ist der Herstellprozess noch kostengünstig darstellbar. Schließlich ist bei derartigen Relationen die Qualitätskontrolle, z.B. in Form der Messung von Dimensionen und/oder Materialstärken sehr kostengünstig darstellbar.

Weiter bevorzugt endet eine offene Seite der Verbindungstaschen auf Höhe eines Innenbodens der Bodenplatte der Steckaufnahme bzw. liegt eine offene Seite der Verbindungstaschen auf Höhe eines Innenbodens der Bodenplatte der Steckaufnahme. Dadurch wird vorteilhaft eine besonders einfach gestaltete Geometrie der Verbindungstasche bereitgestellt. Dies ermöglicht eine besonders einfache und kostengünstige Herstellung und Qualitätskontrolle.

Ein besonders einfacher und kostengünstiger Aufbau des Messerleisten-Grundkörpers wird erreicht, wenn wenigstens eine Seitenwand der Steckaufnahme und eine Taschen-Seitenwand der Verbindungstasche in einer gemeinsamen Wandebene W liegen. Vorzugsweise liegen mehrere oder sogar alle Seitenwände der Steckaufnahme und Taschen-Seitenwände der Verbindungstasche, welche z.B. senkrecht oder im Wesentlichen senkrecht zu einer Erstreckungsrichtung des Messerleisten-Grundkörpers verlaufen, in einer gemeinsamen Wandebene W.

Besonders bevorzugt liegen alle Seitenwände der Steckaufnahmen entlang der ersten Richtung Z1 senkrecht zur Erstreckungsrichtung des Messerleisten-Grundkörpers und liegen jeweils in einer gemeinsamen Wandebene W mit einer der Taschen-Seitenwände der Verbindungstaschen. Durch die Anordnung der ersten Richtung senkrecht zur Erstreckungsrichtung des Messerleisten-Grundkörpers wird vorteilhaft eine besonders einfache Herstellung der Messerleiste ermöglicht, da in diesem Fall auch die Gegenstecker senkrecht zur Erstreckungsebene in die Steckaufnahmen eingesteckt werden. Demzufolge können die Kontaktierungselemente besonders einfach in den Messerleisten-Grundkörper eingebracht werden.

Um eine Steifigkeit des Messerleisten-Grundkörpers weiter zu verbessern und um die Herstellung vorteilhaft kostengünstig zu ermöglichen, ist der Messerleisten-Grundkörper ein Spritzgussteil. Dabei kann als Material z.B. ein mit Fasern verstärkter Kunststoff verwendet werden. Der faserverstärkte Kunststoff erhöht dabei eine Steifigkeit, wobei der Messerleisten-Grundkörper trotzdem einfach und kostengünstig mittels Spritzguss herstellbar ist.

Gemäß einer weiteren bevorzugten Ausgestaltung der Erfindung sind die Fasern in den Seitenwänden der Steckaufnahme und den Taschen-Seitenwänden der Verbindungstaschen im Wesentlichen senkrecht (± 20° zur senkrechten Richtung, bevorzugt ± 10° zur senkrechten Richtung) zur Bodenplatte der Steckaufnahmen ausgerichtet. Insbesondere ist ein Anteil der Fasern von 75% bis 100% im Wesentlichen senkrecht zur Bodenplatte der Steckaufnahmen ausgerichtet. Besonders bevorzugt ist der Anteil der Fasern, die senkrecht zur Bodenplatte der Steckaufnahmen ausgerichtet sind, in einem Bereich von 85% bis 95% und beträgt insbesondere 90%. Dadurch wird vorteilhaft eine besonders hohe Steifigkeit und Robustheit der Seitenwände der Steckaufnahmen gewährleistet, so dass diese auch bei häufigen Steckvorgängen und/oder bei Steckvorgängen, die unter hohem Krafteinsatz erfolgen gegen eine Beschädigung sicher sind. Gleichzeitig kann dadurch die Wandstärke der Seitenwände reduziert werden, so dass Material gespart werden kann und die Steckaufnahmen näher zusammengerückt werden können, was wertvollen Platz spart. Für die Verbindungstaschen als eine Art Kompensationselement gegen anisotrope Schwindung ist vorteilhaft dieselbe Orientierung der Fasern vorgesehen. Dabei versteht sich, dass die Längsrichtung der Fasern, also deren längste Erstreckungsrichtung, den Bezugspunkt für die Bestimmung des Winkels zur Bodenplatte bildet.

Die Fasern, die im faserverstärkten Kunststoff verwendet werden, sind vorzugsweise Glasfasern, wobei der Kunststoff weiter bevorzugt Polyamid oder Polybutylenterephthalat ist. Dadurch kann vorteilhaft ein besonders kostengünstiger und einfach herstellbarer Messerleisten-Grundkörper geschaffen werden. Weiterhin vorteilhaft ist ein derartiger Messerleisten-Grundkörper besonders stabil bei relativ geringem Materialeinsatz. Er weist vorteilhaft auch eine ausreichend hohe Wärmebeständigkeit auf (z.B. bis wenigstens 80°C) und widersteht auch geringen Temperaturen (z.B. -40°C) ohne Beschädigung.

Die Glasfasern haben weiter bevorzugt einen Anteil am Material des Messerleisten-Grundkörpers in einem Bereich von 20 bis 40 Vol.-% und insbesondere 30 Vol.-%. Dadurch kann vorteilhaft eine besonders hohe Stabilität bei wenig Materialeinsatz geschaffen werden.

Vorzugsweise ist das Material für den Messerleisten-Grundkörper PA66 GF30 oder PBT GF30. Dadurch kann ein besonders kostengünstiger Messerleisten-Grundkörper geschaffen werden, der einfach herstellbar ist, eine hohe Stabilität bei geringem Materialeinsatz aufweist und eine sehr hohe Beständigkeit in einem weiten Temperaturbereich (z.B. -40°C bis 80°C) aufweist und außerdem sehr medienresistent ist (z.B. gegen aggressive Medien wie z.B. Salzwasser, Bremsflüssigkeit, etc.).

Besonders bevorzugt ist eine erste Breite B1 der Steckaufnahmen größer oder gleich einer zweiten Breite B2 der Verbindungstaschen. Die erste Breite B1 der Steckaufnahmen und die zweite Breite B2 der Verbindungstaschen können dabei z.B. in der Ebene E bestimmt werden. Sie erstrecken sich bevorzugt im Wesentlichen senkrecht zur länglichen Erstreckungsrichtung des Messerleisten-Grundkörpers. Dadurch können vorteilhaft die Verbindungstaschen besonders wenig kostbaren Raum unterhalb der Ebene E einnehmen und es kann vorteilhaft Material gespart werden. Der Messerleisten-Grundkörper baut dadurch kompakter und leichter.

Ferner betrifft die vorliegende Erfindung eine elektrische Steckverbindung, umfassend einen erfindungsgemäßen Messerleisten-Grundkörper bzw. Steckerleisten-Grundkörper.

Die Erfindung betrifft auch ein Steuergerät für ein Fahrzeug, insbesondere Kraftfahrzeug, mit einer elektrischen Steckverbindung mit einem erfindungsgemäßen Messerleisten-Grundkörper.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Längsschnittansicht eines Messerleisten-Grundkörpers gemäß einem bevorzugten ersten Ausführungsbeispiel der Erfindung,
- Figur 2: eine schematische Draufsicht des Messerleisten-Grundkörpers von Figur 1,
- Figur 3: eine schematische, perspektivische Ansicht des Messerleisten-Grundkörpers von Figur 1 und eine Vielzahl von am Messerleisten-Grundkörper zu montierenden Kontaktierelementen in Form von Pins für eine elektrische Kontaktierung,
- Figur 4: eine schematische, vergrößerte Teil-Schnittansicht des Messerleisten-Grundkörpers von Figur 1,
- Figur 5: eine schematische Teil-Schnittansicht eines Messerleisten-Grundkörpers gemäß einem zweiten Ausführungsbeispiel der Erfindung, und
- Figur 6: eine schematische Teil-Schnittansicht eines alternativen Messerleisten-Grundkörpers.

### Bevorzugte Ausführungsformen der Erfindung

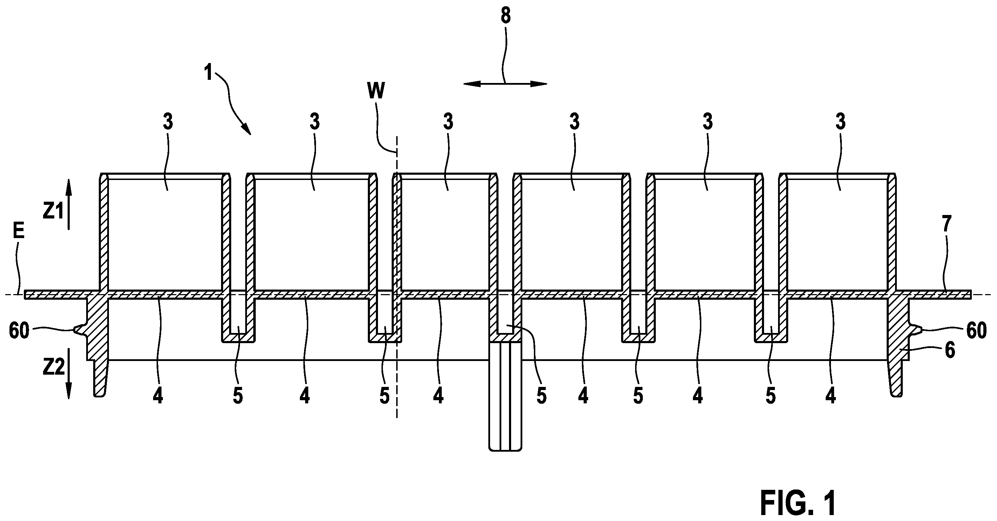

Nachfolgend wird unter Bezugnahme auf die **Figuren 1 bis 4** ein Messerleisten-Grundkörper 1 bzw. Steckerleisten-Grundkörper bzw. Pinleisten-Grundkörper gemäß einem ersten bevorzugten Ausführungsbeispiel der Erfindung im Detail beschrieben.

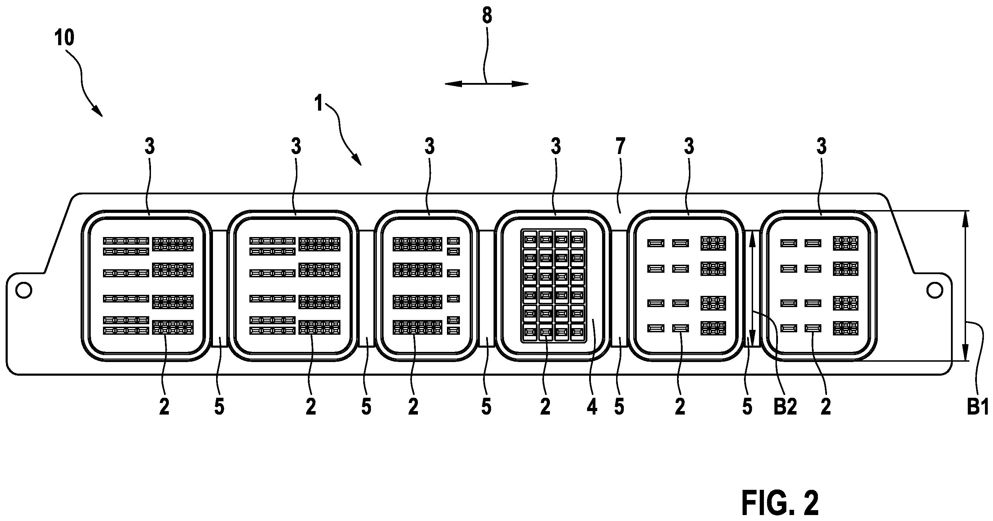

Wie aus **Figur 1** **und** **2** ersichtlich ist, umfasst der Messerleisten-Grundkörper 1 eine Vielzahl von einseitig offenen Steckaufnahmen 3. Die Steckaufnahmen 3 sind in Reihe in einer Erstreckungsrichtung 8 des Messerleisten-Grundkörpers 1 angeordnet. Die Steckeraufnahmen bzw. Steckaufnahmen 3 sind dabei in diesem Ausführungsbeispiel lediglich beispielhaft quaderförmig mit abgerundeten Ecken und genau einer offenen Seite 30 ausgebildet. Sie können auch andere Grundformen aufweisen (z.B. trapezförmig, rund, dreieckig, etc.) und beispielsweise an den Seiten geschlitzt oder gelöchert ausgebildet sein.

Wie insbesondere aus **Figur 2** ersichtlich ist, weisen die Steckaufnahmen 3 unterschiedliche Größen auf. Die Steckaufnahmen 3 sind dabei eingerichtet, nicht gezeigte Steckelemente, beispielsweise Stecker eines Kabelbaums oder dgl., aufzunehmen.

Wie weiter aus **Figur 2** ersichtlich ist, weisen die Steckaufnahmen 3 hier lediglich beispielhaft alle eine gleiche erste Breite B1 auf. Die erste Breite B1 definiert dabei die Breite senkrecht zur Erstreckungsrichtung 8 des Messerleisten-Grundkörpers 1.

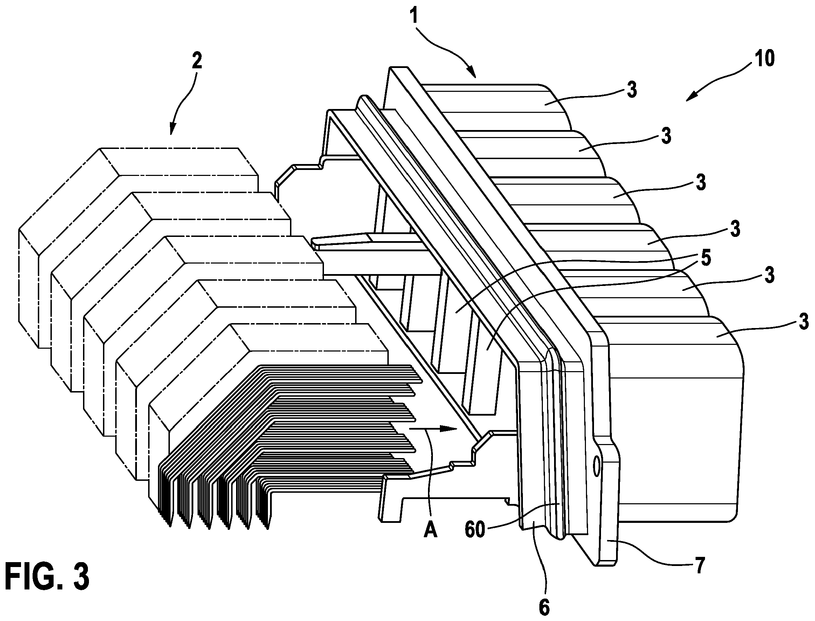

Der Messerleisten-Grundkörper 1 ist Teil einer Messerleiste 10 bzw. Steckerleiste bzw. Pinleiste, welche, wie in **Figur 3** schematisch in einer Art Explosionsfigur dargestellt, für eine elektrische Kontaktierung eine Vielzahl von (Flach) Messern oder (Flach- oder Rund) Pins 2 (allgemein: Kontaktierelemente mit beliebigem Querschnitt) aufweist. Wie aus Figur 2 ersichtlich ist, sind die Pins unterschiedlich ausgestaltet (hier: quadratische und rechteckige Querschnitte) und treten in einem fertig hergestellten bzw. montierten Zustand durch den Messerleisten-Grundkörper in einen Innenbereich der offenen Steckaufnahmen 3 ein. Sie können z.B. in den Messerleisten-Grundkörper 1 eingeschossen bzw. eingestitcht werden in einem z.B. zunächst nicht gebogenem Zustand und werden z.B. anschließend in die in **Figur 3** dargestellte Form umgebogen.

Die hier lediglich beispielhaft dargestellte Messerleiste 10 ist somit eine hochpolige Messerleiste, welche z.B. für eine elektrische Kontaktierung eines Steuergeräts eines Kraftfahrzeugs eingerichtet ist. Die Messerleiste 10 muss hierbei höchste maßliche Anforderungen erfüllen, um eine exakte Kontaktierung der Pins 2 auf einer Leiterplatte oder dgl. und eine exakte Kontaktierung mit Kontakten in einem in eine Steckaufnahme 3 eingesteckten Steckelement (hier nicht dargestellt) sicherzustellen. Weiterhin muss auch eine sichere Abdichtung der gesteckten Verbindung zwischen Steckaufnahmen und Steckelementen ermöglicht werden. Schließlich soll eine Mediendichtheit von einer Oberseite der Messerleiste 10 (Seite der Steckaufnahmen) zur Unterseite der Messerleiste 10 gewährleistet sein.

Der Messerleisten-Grundkörper 3 ist in dieser Ausführungsform lediglich beispielhaft ein Spritzgussbauteil, wobei als Material für den Spritzguss vorzugsweise ein mit Fasern verstärkter Kunststoff verwendet wird. Nachdem der Messerleisten-Grundkörper 3 gespritzt wurde, werden dann in diesem Ausführungsbeispiel die Pins 2 von einer Seite des Messerleisten-Grundkörpers 1 durch Bodenplatten 4, welche den Boden jeder Steckaufnahme 3 bilden, hindurchgestitcht bzw. eingeschossen. Es versteht sich, dass auch eine andere Herstellung möglich ist. z.B. ein Fräsen aus dem Vollen oder 3D-Druck, etc. Es versteht sich weiterhin, dass auch andere Materialien verwendbar sind, z.B. ein Kunststoff, der kein Füllmaterial enthält oder der z.B. kugelförmige Füllstoffe enthält. Grundsätzlich kann auch Keramik, etc. verwendet werden.

Wie weiter insbesondere aus **Figur 1** ersichtlich ist, sind zwischen einander benachbarten Steckaufnahmen 3 jeweils eine einseitig offene Verbindungstasche 5 angeordnet. Die Verbindungstasche 5 verbindet dabei die jeweils benachbart zueinander angeordneten Steckaufnahmen 3 miteinander. Es versteht sich, dass nicht zwingend zwischen allen jeweils zueinander benachbarten Steckaufnahmen 3 jeweils eine Verbindungstasche 5 angeordnet sein muss.

Eine Ebene E, in welcher die Bodenplatten 4 der Steckaufnahmen 3 liegen, unterteilt den Messerleisten-Grundkörper 1 in einen oberen Teil, in welchem die Steckaufnahmen 3 angeordnet sind und einen unteren Teil, an bzw. in welchem die Verbindungstaschen 5 angeordnet sind.

Die Steckaufnahmen 3 stehen somit ausgehend von der Ebene E, in dieser beispielhaften Ausführungsform senkrecht, in eine erste Richtung Z1 vor und die Verbindungstaschen 5 stehen ausgehend von der Ebene E, in dieser beispielhaften Ausführungsform senkrecht, in eine zweite Richtung Z2, entgegengesetzt zur ersten Richtung Z1 vor. Die Verbindungstaschen 5 weisen dabei hier beispielhaft ebenfalls jeweils nur eine offene Seite 50 auf, wobei die offene Seite 50 der Verbindungstaschen 5 und eine offene Seite 30 der Steckaufnahmen hier beispielhaft in die gleiche Richtung, nämlich die erste Richtung Z1, gerichtet sind.

Wie aus der Draufsicht von **Figur 2** ersichtlich ist, weisen die Verbindungstaschen 5 eine zweite Breite B2 auf, welche senkrecht zur Erstreckungsrichtung 8 definiert ist. Die zweite Breite B2 ist dabei kleiner als die erste Breite B1 der offenen Steckaufnahmen 3. Die zweite Breite B2 liegt dabei in einem Bereich von 75% bis 90% der ersten Breite B1 (0,75 x B1 bis 0,9 x B1).

In Draufsicht **(****Figur 2****)** weisen die Verbindungstaschen 5 hier beispielhaft somit ebenfalls eine im Wesentlichen rechteckige Form auf, allerdings sind diese in Erstreckungsrichtung 8 deutlich schmaler als die Steckaufnahmen 3 ausgebildet. Beispielsweise beträgt die Länge entlang der Erstreckungsrichtung 8 ca. 5% bis 20% der Länge der benachbarten Steckaufnahmen 3 entlang der Erstreckungsrichtung 8. Beispielsweise weist Verbindungstasche 5 entlang der Erstreckungsrichtung 8 eine Länge von wenigstens 0,5mm, bevorzugt von wenigstens 1mm auf. Auf diese Weise lässt sich die Verbindungstasche 5 besonders einfach fertigen. Sie kann dann dem Verzug besonders gut entgegen wirken. Die Länge einer Verbindungstasche 5 entlang der Erstreckungsrichtung kann z.B. vorzugsweise in einem Bereich zwischen 0,5 mm und 7 mm liegen, bevorzugt in einem Bereich zwischen 1 mm und 5 mm. Auf diese Weise lässt sich die Verbindungstasche 5 einfach fertigen. Sie kann einerseits genug Gegenspannung aufbringen, um den Verzug zu minimieren, gleichzeitig wird einer Schwächung oder Instabilität des Messerleisten-Grundkörpers 1 entgegen gewirkt.

Wie aus den **Figuren 1** **und** **2** ersichtlich ist, ist somit zwischen allen einander benachbarten Steckaufnahmen 3 jeweils eine separate Verbindungstasche 5 ausgebildet. Da die Verbindungstaschen 5 ausgehend von der Ebene E an der anderen Seite der Ebene E (unterer Teil) verglichen mit der Steckaufnahmen 3 (oberer Teil) liegen, können Maßungenauigkeiten und insbesondere ein Verzug, welcher beim Spritzgießvorgang (oder auch bei einem 3D-Druck, etc.) des Messerleisten-Grundkörpers 1 auftreten kann, ausgeglichen werden. Dabei kommt es dann nicht mehr auf eine Wahl des Materials an, d.h.: die Maßhaltigkeit wird sowohl bei Materialien wie füllstoff-freien Kunststoffen erreicht wie bei Kunststoffen mit z.B. kugelförmigem Füllstoff als auch bei Kunststoffen mit faserartigem Füllstoff. Dies erlaubt eine sehr freie Materialauswahl bei höchster Maßhaltigkeit ohne besondere Herstellungstechniken (2-Komponenten-Spritzguss) und ohne besondere Einlegeteile zur Verzugsminimierung. Gleichzeitig kann dieses Ziel mit lediglich geringem Zusatzraumbedarf im unteren Teil erreicht werden. Durch eine Auswahl von geometrischen Parametern der Verbindungstasche 5 kann somit eine gezielte Beeinflussung eines Verzugs während des Spritzgießvorgangs mit sehr einfachen und kostengünstigen Mitteln und mit sehr geringem Bedarf an Zusatzraum und Zusatzmaterial ausgeführt werden.

Die Verbindungstaschen 5 weisen in diesem Ausführungsbeispiel auch einen quaderförmigen Aufbau mit genau einer offenen Seite 50 auf, wobei auch weitere Seiten zumindest teilweise offen ausgeführt sein können.

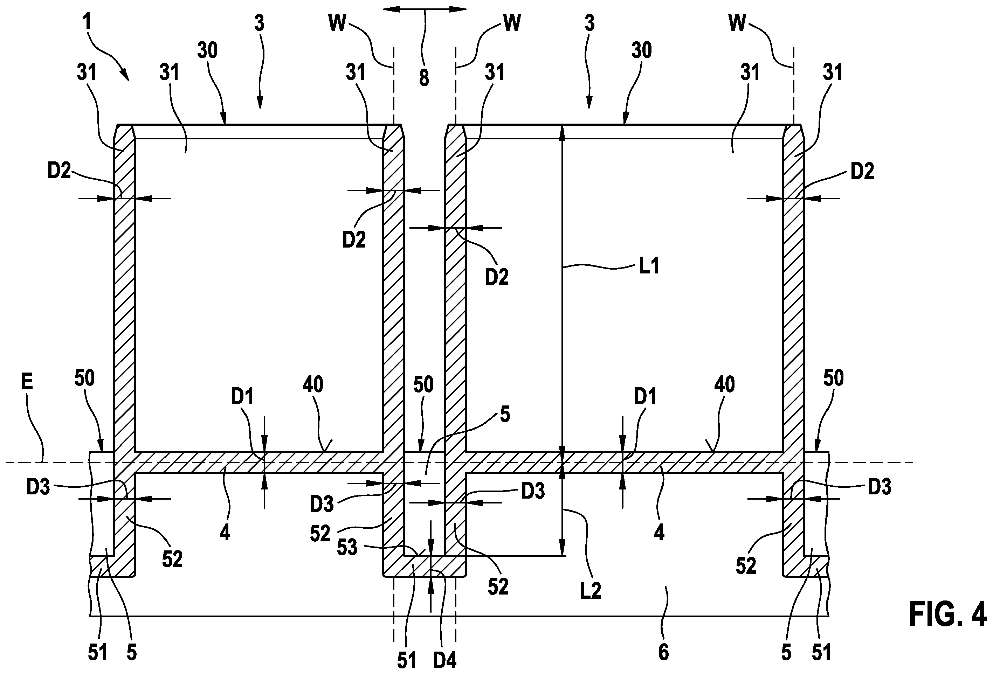

**Figur 4** zeigt eine Schnittansicht durch den Messerleisten-Grundkörper 1 aus **Figur 1****.** Die Verbindungstaschen 5 weisen dabei eine Grundplatte 51 sowie vier Taschen-Seitenwände 52 auf. Die Grundplatte 51, welche am weitesten entfernt von der Ebene E ist, hat dabei eine Wirkung entsprechend einer Zugstange in Erstreckungsrichtung 8. Dadurch kann insbesondere ein Winkelverzug an den Steckaufnahmen 3, welcher aufgrund der Ausdehnung der Steckaufnahmen 3 in die erste Richtung Z1 an Seitenwänden 31 der Steckaufnahme auftreten kann, vermieden werden.

**Figur 4** zeigt im Detail zwei zueinander benachbarte Steckaufnahmen 3 mit unterschiedlicher Geometrie, insbesondere unterschiedlicher (Längen-) Ausdehnung in Erstreckungsrichtung 8.

Wie weiter aus **Figur 4** ersichtlich ist, weist die Bodenplatte 4 der Steckaufnahmen 3 eine erste Wandstärke D1 auf und die Seitenwände 31 der Steckaufnahmen 3 eine zweite Wandstärke D2 auf. Dabei ist die erste Wandstärke D1 doppelt so groß wie die zweite Wandstärke D2.

Weiterhin weisen die Verbindungstaschen 5 eine dritte Wandstärke D3 von Taschen-Seitenwänden 52 der Verbindungstasche 5 auf. Eine vierte Wandstärke D4 der Grundplatte 51 der Verbindungstaschen 5 ist gleich der dritten Wandstärke D3. Somit gilt in diesem Ausführungsbeispiel: die erste Wandstärke D1 ist doppelt so groß wie die zweite Wandstärke D2. Die zweite Wandstärke D2, die dritte Wandstärke D3 und die vierte Wandstärke D4 der Steckaufnahmen 3 und der Verbindungstaschen 5 sind gleich groß. Andere Verhältnisse sind gleichfalls denkbar.

Weiterhin liegen die Seitenwände 31 der Steckaufnahmen 3, welche senkrecht zur Erstreckungsrichtung 8 sind, in einer gemeinsamen Wand-Ebene W mit den Taschen-Seitenwänden 52 der Verbindungstaschen 5. Somit schneiden die Wand- Ebenen W die Ebene E in einem rechten Winkel. Die Wand- Ebenen W sind hierbei alle parallel zueinander.

Wie weiter aus **Figur 4** ersichtlich ist, weisen die Seitenwände 31 der Steckaufnahmen 3 ausgehend von der Ebene E, die eine Mittelebene der Bodenplatten 4 bildet, eine erste Länge L1 auf, wobei die Taschen-Seitenwände 52 der Verbindungstaschen 5 ausgehend von einem Innenboden 53 der Grundplatte 51 bis zur Mittelebene der Bodenplatte 4 eine zweite Länge L2 aufweisen. Hierbei ist in diesem Ausführungsbeispiel zur Veranschaulichung gewählt: L2 beträgt ungefähr 33% von L1. Somit beträgt die zweite Länge L2 der Verbindungstaschen 5 nur ungefähr ein Drittel der ersten Länge L1 der Steckaufnahmen 3. Auf diese Weise ragt die zweite Länge L2 nicht unnötig weit in den unteren Teil, in dem z.B. eine Leiterplatte eines Steuergeräts angeordnet sein kann. Beispielsweise kann die zweite Länge L2 einer Verbindungstasche 5 in einem Bereich zwischen 6 mm und 15 mm liegen, bevorzugt in einem Bereich zwischen 8 mm und 12 mm.

Weiterhin liegt eine offene Seite 50 der Verbindungstaschen 5, wie im Detail aus **Figur 4** ersichtlich ist, auf Höhe des Innenbodens 40 der Steckaufnahme 3. Die Verbindungstasche 5 weist also in diesem Ausführungsbeispiel keine eigenen Wände auf, die z.B. über den Innenboden 40 in den oberen Teil des Messerleisten-Grundkörpers 1 hinein ragen.

Wie weiter aus den **Figuren 1 bis 3** ersichtlich ist, umfasst die Messerleiste 10 ferner einen umlaufenden Randbereich 7, welcher vollständig um die Anordnung der Steckaufnahmen 3 herumläuft. Der umlaufende Randbereich 7 liegt dabei, wie aus **Figur 1** ersichtlich ist, auf Höhe der Bodenplatten 4 der Steckaufnahmen 3. Der umlaufende Randbereich 7 stellt hierbei eine zusätzliche Versteifung der Messerleiste 10 bereit.

Wie weiter aus den **Figuren 1** **und** **3** ersichtlich ist, umfasst in dieser Ausführungsform beispielhaft die Messerleiste 10 ferner einen umlaufenden Versteifungsrand 6. Der umlaufende Versteifungsrand 6 steht in einem Winkel von ca. 90° vom umlaufenden Randbereich 7 in Richtung der zweiten Richtung Z2 vor, in diesem Ausführungsbeispiel in der Art eines Kragens. Der umlaufende Versteifungsrand 6 weist dabei ferner eine Versteifungsrippe 60 auf. Die Versteifungsrippe 60 steht dabei zur Außenseite des umlaufenden Versteifungsrandes 6 vor (radial nach außen). Wie aus **Figur 1** ersichtlich ist, ist die Versteifungsrippe 60 etwas näher zur Ebene E angeordnet als der Innenboden 53 der Verbindungstaschen 5 zur Ebene E.

Somit kann durch das Vorsehen der Verbindungstaschen 5, deren offene Seite 50 im Wesentlichen in die gleiche Richtung wie die offene Seite 30 der Steckaufnahmen 3 gerichtet ist, nämlich in Richtung der ersten Richtung Z1, ein Verzug der Messerleiste 10 vermiedenen werden. Dadurch kann eine exzellente Maßgenauigkeit der Messerleiste 10 bei einem Spritzguss, aber auch bei einem 3D-Druck, etc. erreicht werden. Als Material für den Messerleisten-Grundkörper 1 wird in diesem Ausführungsbeispiel vorzugsweise ein mit Glasfasern verstärkter Kunststoff, insbesondere Polyamid oder Polybutylenterephthalat, verwendet. Die Glasfasern haben vorzugsweise einen Anteil am Material des Messerleisten-Grundkörpers 1 in einem Bereich von ca. 30 Vol.-%. Dabei sind wenigstens 90% der Glasfasern in die gleiche Richtung im Wesentlichen senkrecht (90° ± 20°) zur Ebene E ausgerichtet.

Dabei kann der Messerleisten-Grundkörper z.B. auf einfache Weise als Massenbauteil im Spritzgussverfahren hergestellt werden, wobei die Verzugsfreiheit auch bei anderen Herstellungsverfahren und dem Einsatz anderer Materialien erreichbar ist.

Besonders bevorzugt weist die Messerleiste 10 fünf oder sechs in Reihe angeordnete Steckaufnahmen 3 auf. Hierbei sind vorzugsweise bis max. 336 Pole in Form von Pins 2 vorgesehen, wobei die Erfindung auch bei einer höheren Zahl von Kontaktierelementen funktioniert. Vorzugsweise ist zwischen jeweils benachbarten Steckeraufnahmen 3 jeweils eine Verbindungstasche 5 vorgesehen. Wenn somit n Steckaufnahmen 3 vorgesehen sind, ergeben sich vorzugsweise n-1 Verbindungstaschen. Dabei erhöhen die Verbindungstaschen 5 ein Gewicht der Messerleisten des Messerleisten-Grundkörpers 1 nur marginal, da die Verbindungstaschen 5 einseitig offen gestaltet sind und nicht allzuweit in den unteren Teil ragen. Als zusätzliches Gewicht der Verbindungstaschen kommt somit nur das Gewicht der Taschen-Seitenwände 52 zum Tragen, da die erfindungsgemäße Messerleiste 10 keine durchgehende Platte mehr aufweist.

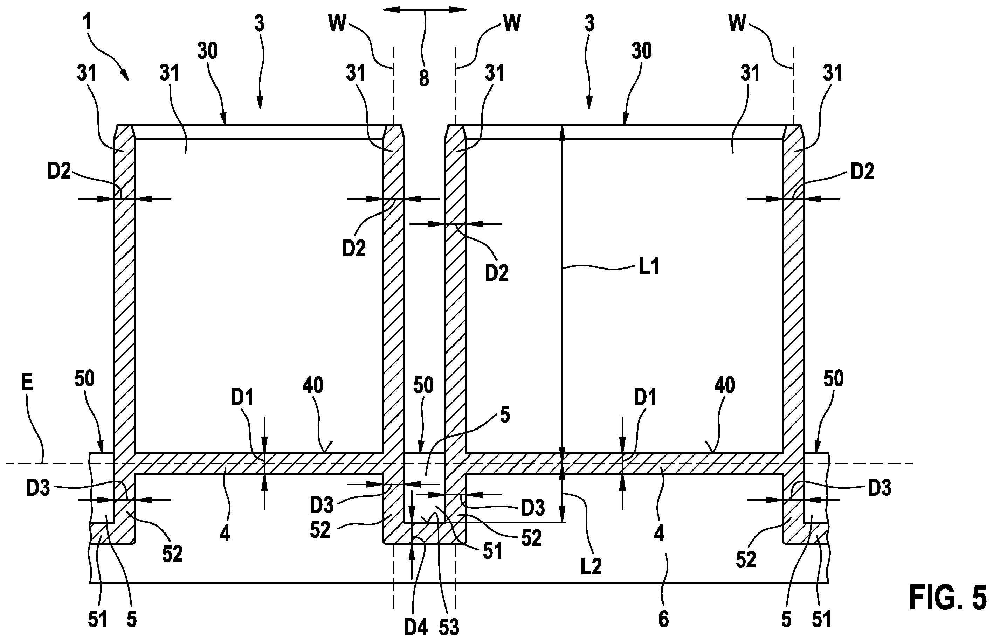

**Figur 5** zeigt einen Messerleisten-Grundkörper 1 gemäß einem zweiten Ausführungsbeispiel der Erfindung. Gleiche bzw. funktional gleiche Teile sind mit den gleichen Bezugszeichen wie im ersten Ausführungsbeispiel bezeichnet.

Im Unterschied zum ersten Ausführungsbeispiel ist beim zweiten Ausführungsbeispiel eine zweite Länge L2 der Verbindungstaschen 5 senkrecht zur Ebene E unterschiedlich ausgestaltet. Beim zweiten Ausführungsbeispiel beträgt die zweite Länge L2 der Taschen-Seitenwände 52 von dem Innenboden 53 der Verbindungstaschen bis zur Ebene E nur ungefähr 20% der ersten Länge L1 von der Ebene E bis zur offenen Seite 30 der Steckaufnahmen 3. Somit sind die Verbindungstaschen 5 in Richtung der zweiten Richtung Z2 etwas kürzer ausgebildet als im ersten Ausführungsbeispiel. Dadurch kann wertvoller Raum im unteren Teil des Messerleisten-Grundkörpers 1 gespart werden und z.B. eine Leiterplatte näher am Messerleisten-Grundkörper 1 platziert werden. Trotzdem kann ein Verzug des Messerleisten-Grundkörpers 1 durch die Wirkung des Innenbodens 53 der Verbindungstaschen 5 als Zugstange erreicht werden. Im Unterschied zum Ausführungsbeispiel aus **Figur 4** gilt dabei für das Ausführungsbeispiel der **Figur 5** Folgendes: die erste Wandstärke D1, die zweite Wandstärke D2, die dritte Wandstärke D3 und die vierte Wandstärke D4 der Steckaufnahmen 3 und der Verbindungstaschen 5 sind allesamt im Wesentlichen gleich groß, es gilt somit ungefähr D1 = D2 = D3 = D4. Ansonsten entspricht dieses Ausführungsbeispiel dem vorhergehenden Ausführungsbeispiel, so dass auf die dort gegebene Beschreibung verwiesen werden kann.

Zu den beiden Ausführungsbeispielen sei angemerkt, dass somit durch das Vorsehen der offenen Verbindungstaschen 5, die in die gleiche Richtung offen sind wie die offenen Steckaufnahmen 3, ein Gleichgewicht zwischen Spannungen oberhalb und unterhalb der Ebene E, welche in einer Mitte der ersten Wandstärke D1 der Bodenplatten 4 liegt, erreicht wird. Dabei kann durch die einseitig offenen Verbindungstaschen 5 eine auch für einen Fachmann überraschend einfache Lösung des Verzugsproblems bei Spritzgussteilen für Grundkörper von Messerleisten erreicht werden. Es sei angemerkt, dass es für die Wirkung der Erfindung ausreichend ist, wenn die benachbarten Steckaufnahmen 3 und die dazwischen liegende Verbindungstasche 5 offene Seiten 30, 50 aufweisen, die im Wesentlichen in dieselbe Richtung gerichtet sind. Dabei können die Richtungen der offenen Seiten 30, 50 einen Winkel von z.B. bis zu 40° zueinander einschließen, bevorzugt von bis zu 20°.

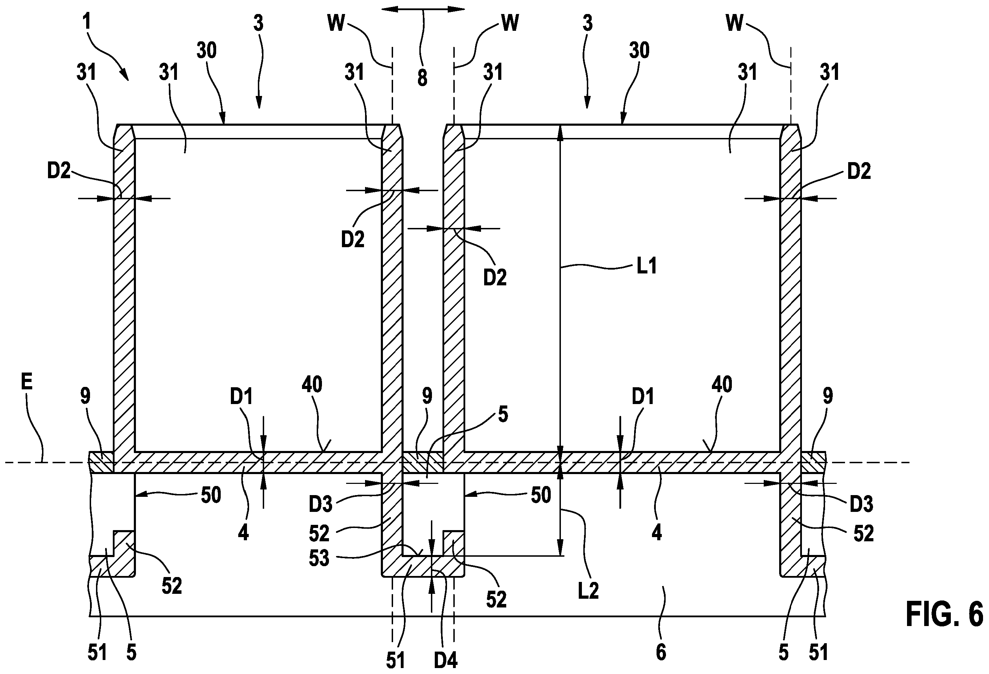

Wie in **Figur 6** gezeigt, wird sogar grundsätzlich eine Verzugsreduzierung des Messerleisten-Grundkörpers 1 erreicht, wenn die Richtung der offenen Seiten 30 der Steckaufnahmen 3 um ungefähr 90° zu der Richtung der offenen Seite 50 der dazwischenliegenden Verbindungstasche 5 liegt. Es ist dann ein Messerleisten-Grundkörper 1 vorgesehen, der eine Vielzahl von einseitig offenen Steckaufnahmen 3 aufweist, welche in einer Erstreckungsrichtung 8 des Messerleisten-Grundkörpers angeordnet sind und welche eingerichtet sind, Steckelemente aufzunehmen. Jede Steckaufnahme 3 weist eine eigene Bodenplatte 4 auf. Zwischen benachbarten Steckaufnahmen 3, insbesondere zwischen allen benachbarten Steckeraufnahmen 3, ist jeweils eine einseitig offene Verbindungstasche 5 angeordnet, welche diese zueinander benachbarten Steckaufnahmen 3 miteinander verbindet. Die Steckaufnahmen 3 stehen ausgehend von der Ebene E, in der die Bodenplatten 4 liegen, in eine erste Richtung Z1 vor und die Verbindungstaschen 5 stehen ausgehend von der Ebene E in eine zweite Richtung Z2 entgegengesetzt zur ersten Richtung Z1 vor. Es ist dann vorgesehen, dass eine offene Seite 50 der Verbindungstaschen 5 und eine offene Seite 30 der Steckaufnahmen 3 im Wesentlichen um 90° ± 40°, insbesondere ± 30°, weiter insbesondere ± 20°, weiter insbesondere ± 10° und weiter insbesondere ± 3°, zueinander gerichtet sind. Dies kann z.B. erreicht werden, indem eine von deren Taschen-Seitenwänden 52 oder die Grundplatte 51 zumindest teilweise, z.B. zumindest zu 20% ihrer Fläche, bevorzugt zu wenigstens 30% ihrer Fläche, geöffnet ist. Eine Dichtheit zur Oberseite des Messerleisten-Grundkörpers 1 kann dann z.B. durch ein Dichtelement 9 oder die Ausbildung einer sehr dünnen Spritzhaut oder eines Dichtbodens mit z.B. maximal 30% der zweiten Dicke D2 oder maximal 15% der ersten Dicke D2 bewirkt werden. Es versteht sich, dass die oben in der Beschreibung angegebenen Weiterbildungen und Ausführungsformen und diejenigen, die in den Unteransprüchen angegeben sind, analog für diese Anordnung gelten und sich auf diese Anordnung rückbeziehen (dies gilt beispielsweise für die Wandstärken und die Verhältnisse von Wandstärken zueinander, von Längen von Seitenwänden und deren Verhältnisse zueinander, die geometrische Anordnungsbeziehung von Wänden, Böden und Taschen, die Herstellungsart, die Materialien, etc.). In den Ausführungsbeispielen der Figuren 1 bis 4 und 5 würde bei dieser Ausführungsform z.B. in der jeweils rechten oder in der linken Seitenwand 52 der Verbindungstaschen 5 eine Öffnung ausgebildet sein. Auch alternierende Öffnungen (links/rechts) sind denkbar.

## Patentansprüche

1. Messerleisten-Grundkörper umfassend
- eine Vielzahl von einseitig offenen Steckaufnahmen (3), welche in einer Erstreckungsrichtung (8) des Messerleisten-Grundkörpers angeordnet sind und welche eingerichtet sind, Steckelemente aufzunehmen,
- wobei jede Steckaufnahme (3) eine eigene Bodenplatte (4) aufweist,
- wobei zwischen benachbarten Steckaufnahmen (3), insbesondere zwischen allen benachbarten Steckaufnahmen (3), jeweils eine einseitig offene Verbindungstasche (5) angeordnet ist, welche diese zueinander benachbarten Steckaufnahmen (3) miteinander verbindet,
- wobei die Steckaufnahmen (3) ausgehend von einer Ebene (E), in der die Bodenplatten (4) liegen, in eine erste Richtung (Z1) vorstehen und die Verbindungstaschen (5) ausgehend von der Ebene (E) in eine zweite Richtung (Z2) entgegengesetzt zur ersten Richtung (Z1) vorstehen, und
- wobei eine offene Seite (50) der Verbindungstaschen (5) und eine offene Seite (30) der Steckaufnahmen (3) im Wesentlichen in die gleiche Richtung gerichtet sind.

2. Messerleisten-Grundkörper nach Anspruch 1,
wobei die Bodenplatte (4) der Steckaufnahmen (3) eine erste Wandstärke D1 aufweist und die Seitenwände (31) der Steckaufnahmen (3) eine zweite Wandstärke D2 aufweisen, wobei die Ungleichung 0,3 x D1 < D2 < 0,65 x D1 erfüllt ist und insbesondere D2 = 0,5 x D1 ist.

3. Messerleisten-Grundkörper nach Anspruch 1 oder 2,
wobei die zweite Wandstärke D2 von Seitenwänden (31) der Steckaufnahmen (3), die von der Bodenplatte (4) vorstehen, gleich einer dritten Wandstärke D3 von Taschen-Seitenwänden (52) der Verbindungstasche (5) ist.

4. Messerleisten-Grundkörper nach einem der vorhergehenden Ansprüche, wobei eine vierte Wandstärke D4 einer Grundplatte (51) der Verbindungstaschen (5) gleich der dritten Wandstärke D3 der Taschen-Seitenwände (52) der Verbindungstaschen (5) ist.

5. Messerleisten-Grundkörper nach einem der vorhergehenden Ansprüche, wobei die Ebene (E) eine Mittelebene der Bodenplatte (4) ist,
wobei die Seitenwände (31) der Steckaufnahmen (3) ausgehend von der Mittelebene der Bodenplatten (4) eine erste Länge L1 aufweisen,
wobei die Taschen-Seitenwände (52) der Verbindungstaschen (5) ausgehend von einem Innenboden (53) der Grundplatte (51) bis zur Mittelebene der Bodenplatte (4) eine zweite Länge L2 aufweisen,
wobei die erste Länge L1 mindestens doppelt so groß ist wie die zweite Länge L2.

6. Messerleisten-Grundkörper nach Anspruch 5,
wobei die Ungleichung 0,15 x L1 < L2 < 0,5 x L1 erfüllt ist und insbesondere die Ungleichung 0,2 x L1 < L2 < 0,38 x L1 erfüllt ist und weiter insbesondere L2 = 0,33 x L1 ist.

7. Messerleisten-Grundkörper nach einem der vorhergehenden Ansprüche, wobei die offene Seite (50) der Verbindungstaschen (5) auf Höhe eines Innenbodens (40) der Bodenplatte (4) der Steckaufnahmen (3) liegt.

8. Messerleisten-Grundkörper nach einem der vorhergehenden Ansprüche, wobei wenigstens eine Seitenwand (31) der Steckaufnahme (3) und eine Taschen-Seitenwand (52) der Verbindungstasche (5) in einer gemeinsamen Wand-Ebene (W) liegen.

9. Messerleisten-Grundkörper nach Anspruch 8,
wobei alle Seitenwände (31) der Steckaufnahmen (3) entlang der ersten Richtung (Z1) senkrecht zur Erstreckungsrichtung (8) des Messerleisten-Grundkörpers liegen und jeweils in einer gemeinsamen Wand-Ebene (W) mit einer der Taschen-Seitenwände (52) der Verbindungstaschen (5) liegen.

10. Messerleisten-Grundkörper nach einem der vorherigen Ansprüche,
wobei der Messerleisten-Grundkörper (1) ein Spritzgussteil ist und insbesondere als Material ein mit Fasern verstärkter Kunststoff verwendet wird.

11. Messerleisten-Grundkörper nach Anspruch 10,
wobei die Fasern in den Seitenwänden (31) der Steckaufnahmen (3) und den Taschen-Seitenwänden (52) der Verbindungstaschen (5) im Wesentlichen senkrecht zur Bodenplatte (4) der Steckaufnahmen (3) ausgerichtet sind.

12. Messerleisten-Grundkörper nach Anspruch 10 oder 11,
wobei die Fasern Glasfasern sind,
wobei der Kunststoff Polyamid oder Polybutylenterephthalat ist.

13. Messerleisten-Grundkörper nach Anspruch 12,
wobei die Glasfasern einen Anteil am Material des Messerleisten-Grundkörpers (1) im Bereich von 20-40 Vol.-% aufweisen.

14. Messerleisten-Grundkörper nach Anspruch 12 oder 13,
wobei das Material PA66 GF30 ist oder PBT GF30 ist.

## Claims

1. Male multipoint connector main body, comprising
- a plurality of plug-in receptacles (3) which are open on one side, are arranged in an extension direction (8) of the male multipoint connector main body and are designed to receive plug-in elements,
- wherein each plug-in receptacle (3) has a dedicated bottom plate (4),
- wherein a connection pocket (5) which is open on one side is arranged between adjacent plug-in receptacles (3), in particular between all adjacent plug-in receptacles (3), the connection pocket connecting these mutually adjacent plug-in receptacles (3) to each other,
- wherein the plug-in receptacles (3), starting from a plane (E) in which the bottom plates (4) lie, protrude in a first direction (Z1) and the connection pockets (5), starting from the plane (E), protrude in a second direction (Z2) opposite to the first direction (Z1), and
- wherein an open side (50) of the connection pockets (5) and an open side (30) of the plug-in receptacles (3) are directed substantially in the same direction.

2. Male multipoint connector main body according to Claim 1,
wherein the bottom plate (4) of the plug-in receptacles (3) has a first wall thickness D1 and the side walls (31) of the plug-in receptacles (3) have a second wall thickness D2, wherein the inequality 0.3 x D1 < D2 < 0.65 x D1 is satisfied and in particular D2 = 0.5 x D1.

3. Male multipoint connector main body according to Claim 1 or 2,
wherein the second wall thickness D2 of side walls (31) of the plug-in receptacles (3), which protrude from the bottom plate (4), is equal to a third wall thickness D3 of pocket side walls (52) of the connection pocket (5).

4. Male multipoint connector main body according to any of the preceding claims,
wherein a fourth wall thickness D4 of a base plate (51) of the connection pockets (5) is equal to the third wall thickness D3 of the pocket side walls (52) of the connection pockets (5).

5. Male multipoint connector main body according to any of the preceding claims,
wherein the plane (E) is a central plane of the bottom plate (4),
wherein the side walls (31) of the plug-in receptacles (3) have a first length L1 starting from the central plane of the bottom plates (4),
wherein the pocket side walls (52) of the connection pockets (5) have a second length L2 starting from an internal floor (53) of the base plate (51) as far as the central plane of the bottom plate (4),
wherein the first length L1 is at least twice as large as the second length L2.

6. Male multipoint connector main body according to Claim 5,
wherein the inequality 0.15 x L1 < L2 < 0.5 x L1 is satisfied and in particular the inequality 0.2 x L1 < L2 < 0.38 x L1 is satisfied and further in particular L2 = 0.33 x L1.

7. Male multipoint connector main body according to any of the preceding claims,
wherein the open side (50) of the connection pockets (5) lies at the level of an internal floor (40) of the bottom plate (4) of the plug-in receptacles (3).

8. Male multipoint connector main body according to any of the preceding claims,
wherein at least one side wall (31) of the plug-in receptacle (3) and one pocket side wall (52) of the connection pocket (5) lie in a common wall plane (W).

9. Male multipoint connector main body according to Claim 8,
wherein all side walls (31) of the plug-in receptacles (3) lie along the first direction (Z1) perpendicular to the extension direction (8) of the male multipoint connector main body and each lie in a common wall plane (W) with one of the pocket side walls (52) of the connection pockets (5).

10. Male multipoint connector main body according to any of the preceding claims,
wherein the male multipoint connector main body (1) is an injection-moulded part and in particular a fibre-reinforced plastic is used as a material.

11. Male multipoint connector main body according to Claim 10,
wherein the fibres in the side walls (31) of the plug-in receptacles (3) and the pocket side walls (52) of the connection pockets (5) are oriented substantially perpendicularly to the bottom plate (4) of the plug-in receptacles (3).

12. Male multipoint connector main body according to Claim 10 or 11,
wherein the fibres are glass fibres,
wherein the plastic is polyamide or polybutylene terephthalate.

13. Male multipoint connector main body according to Claim 12,
wherein the glass fibre content in the material of the male multipoint connector main body (1) is in the range of 20-40% by volume.

14. Male multipoint connector main body according to Claim 12 or 13,
wherein the material is PA66 GF30 or PBT GF30.

## Revendications

1. Corps de base de réglette de contacts à couteaux, comprenant
- une pluralité de logements d'enfichage (3) ouverts d'un côté qui sont disposés dans une direction d'extension (8) du corps de base de réglette de contacts à couteaux et qui sont conçus pour recevoir des éléments à enficher,
- dans lequel chaque logement d'enfichage (3) présente sa propre plaque de base (4),
- dans lequel respectivement une poche de liaison (5) ouverte d'un côté est disposée entre deux logements d'enfichage voisins (3), en particulier entre tous les logements d'enfichage voisins (3), et relie entre eux ces logements d'enfichage (3) voisins les uns des autres,
- dans lequel les logements d'enfichage (3) font saillie à partir d'un plan (E), dans lequel sont situées les plaques de base (4), dans une première direction (Z1), et les poches de liaison (5) font saillie à partir du plan (E) dans une deuxième direction (Z2), opposée à la première direction (Z1), et
- dans lequel un côté ouvert (50) des poches de liaison (5) et un côté ouvert (30) des logements d'enfichage (3) sont orientés substantiellement dans la même direction.

2. Corps de base de réglette de contacts à couteaux selon la revendication 1,
dans lequel la plaque de base (4) des logements d'enfichage (3) présente une première épaisseur de paroi D1 et les parois latérales (31) des logements d'enfichage (3) présentent une deuxième épaisseur de paroi D2, dans lequel l'inégalité 0,3 x D1 < D2 < 0,65 x D1 est satisfaite et est en particulier D2 = 0,5 x D1.

3. Corps de base de réglette de contacts à couteaux selon la revendication 1 ou 2,
dans lequel la deuxième épaisseur de paroi D2 des parois latérales (31) des logements d'enfichage (3) qui font saillie à partir de la plaque de base (4) est égale à une troisième épaisseur de paroi D3 des parois latérales de poche (52) de la poche de liaison (5).

4. Corps de base de réglette de contacts à couteaux selon l'une quelconque des revendications précédentes,
dans lequel une quatrième épaisseur de paroi D4 d'une plaque de base (51) des poches de liaison (5) est égale à la troisième épaisseur de paroi D3 des parois latérales de poche (52) des poches de liaison (5).

5. Corps de base de réglette de contacts à couteaux selon l'une quelconque des revendications précédentes,
dans lequel le plan (E) est un plan médian de la plaque de base (4),
dans lequel les parois latérales (31) des logements d'enfichage (3) présentent une première longueur L1 à partir du plan médian des plaques de base (4),
dans lequel les parois latérales de poche (52) des poches de liaison (5) présentent à partir d'un fond intérieur (53) de la plaque de base (51) jusqu'au plan médian de la plaque de base (4) une deuxième longueur L2,
la première longueur L1 étant au moins le double de la deuxième longueur L2.

6. Corps de base de réglette de contacts à couteaux selon la revendication 5,
dans lequel l'inégalité 0,15 x L1 < L2 < 0,5 x L1 est satisfaite, et en particulier l'inégalité 0,2 x L1 < L2 < 0,38 x L1 est satisfaite, en outre en particulier L2 = 0,33 x L1.

7. Corps de base de réglette de contacts à couteaux selon l'une quelconque des revendications précédentes,
dans lequel le côté ouvert (50) des poches de liaison (5) se trouve à la hauteur d'un fond intérieur (40) de la plaque de base (4) des logements d'enfichage (3).

8. Corps de base de réglette de contacts à couteaux selon l'une quelconque des revendications précédentes,
dans lequel au moins une paroi latérale (31) du logement d'enfichage (3) et une paroi latérale de poche (52) de la poche de liaison (5) se trouvent dans un plan de paroi (W) commun.

9. Corps de base de réglette de contacts à couteaux selon la revendication 8,
dans lequel toutes les parois latérales (31) des logements d'enfichage (3) se trouvent le long de la première direction (Z1) perpendiculairement à la direction d'extension (8) du corps de base de réglette de contacts à couteaux et se trouvent respectivement dans un plan de paroi (W) commun avec l'une des parois latérales de poche (52) des poches de liaison (5).

10. Corps de base de réglette de contacts à couteaux selon l'une quelconque des revendications précédentes,
dans lequel le corps de base de réglette de contacts à couteaux (1) est une pièce moulée par injection, et en particulier une matière plastique renforcée par des fibres est utilisée comme matériau.

11. Corps de base de réglette de contacts à couteaux selon la revendication 10,
dans lequel les fibres dans les parois latérales (31) des logements d'enfichage (3) et les parois latérales de poche (52) des poches de liaison (5) sont orientées de manière substantiellement perpendiculaire à la plaque de base (4) des logements d'enfichage (3).

12. Corps de base de réglette de contacts à couteaux selon la revendication 10 ou 11,
dans lequel les fibres sont des fibres de verre,
dans lequel la matière plastique est du polyamide ou du polytéréphtalate de butylène.

13. Corps de base de réglette de contacts à couteaux selon la revendication 12,
dans lequel les fibres de verre présentent une part du matériau du corps de base de réglette de contacts à couteaux (1) dans la plage de 20 à 40 % en volume.

14. Corps de base de réglette de contacts à couteaux selon la revendication 12 ou 13,
dans lequel le matériau est du PA66 GF30 ou du PBT GF30.
